# NEUE EUROPÄISCHE PATENTSCHRIFT

(11) **EP 0 586 715 B2**
(45) Veröffentlichungstag und Bekanntmachung des Hinweises auf die Entscheidung über den Einspruch: **30.05.2001**
(45) Hinweis auf die Patenterteilung: 03.07.1996
(21) Anmeldenummer: 92113370.8
(22) Anmeldetag: 05.08.1992
(51) Int. Cl.: G05B 19/05, H04L 12/40

(54) **Informationsübertragungsverfahren zur Übertragung digitaler Informationen**
Information transfer method for transferring digital data
Procédé de transfert d'informations digitales

(43) Veröffentlichungstag der Anmeldung: 16.03.1994
(73) Patentinhaber: SIEMENS AKTIENGESELLSCHAFT, 80333 München (DE)
(72) Erfinder: Maul, Jürgen Dipl.-Ing. (FH), 8458 Sulzbach-Rosenberg (DE); Sand, Manfred, Dipl.-Ing., 8450 Amberg (DE); Trummer, Georg, Dipl.-Ing. (FH), 8450 Amberg (DE); Schlieker, Werner, Dipl.-Ing. (FH), 8500 Nürnberg (DE)

(56) Entgegenhaltungen:
- EP-A- 0 345 493
- EP-A- 0 367 830
- WO-A-91/14324
- DE-A- 2 657 259
- DE-A- 3 603 751
- GB-A- 2 080 000
- NL-A- 8 401 947
- IEEE Std. 1149.1-1990: "IEEE Standard Test Access Port and boundary-Scan architecture"

## Beschreibung

Die vorliegende Erfindung betrifft ein Informationsübertragungsverfahren zur Übertragung digitaler Informationen zwischen einer Zentraleinheit und einer Anzahl von Baugruppen eines modularen Automatisierungsgerats. über ein Bussystem, das mindestens eine Datenleitung zum Übertragen der Informationen, eine Taktleitung zur Vorgabe eines gemeinsamen Systemtaktes und mindestens eine Steuerleitung zum Übertragen von Steuersignalen aufweist wobei zumindest die Datenleitung durch die Baugruppen hindurchgeführt ist, sowie eine Baugruppe und ein Automatisierungsgerät zur Durchführung des Verfahrens.

Aus der DE-36 03 751 A1 ist ein Verfahren zur Informationsübertragung bekannt, bei dem als Datenpfad ein Ringschieberegister verwendet wird, während Befehlsübertragungen über zueinander und zum Schieberegister parallele Befehlsleitungen erfolgen. Die Registerlange der in das Schieberegister eingeschleiften Einzelregister ist dabei konstant. Nur beim Anlauf des elektrischen Geräts, beim sogenannten Identifikationslauf. kann ein anderes Schieberegister in den Ring eingeschleift sein. In jedem Fall sind aber bei jeder Informationsübertragung über das Ringschiebregister mindestens 4 bzw. 5 Bit pro Untereinheit in das Ringschieberegister eingeschleift. Von daher ist stets das Durchschieben des gesamten Ringschieberegisters erforderlich, um Informationen von der Haupteinheit zu einer der Untereinheiten bzw. umgekehrt zu übertragen. Wenn also z. B. Informationen nur zu einer der Untereinheiten übertragen werden sollen, muß ein Großteil von Leerinformationen mit übertragen werden. Dies verringert die theoretisch erreichbare Informationsübertragungsgeschwindigkeit.

Aus der Druckschrift IEEE Std 1149.1-1990 ist ein Testverfahren für integrierte Schaltungen bekannt. Dieses Verfahren ermöglicht eine Überprüfung der Funktionen von IC-Bausteinen direkt auf der Leiterplatte. Es sind Testzellen vorgesehen, die seriell miteinander verbunden sind, und in einem Testmodus werden Testmuster von einem Test-Daten-Eingang zu einem Test-Daten-Ausgang geleitet.

Aufgabe der vorliegenden Erfindung ist es. die Informationsübertragung über ein Bussystem. das als Schieberegister betreibbar ist. flexibel. effizient und fast ebenso komfortabel wie bei einem parallelen Bussystem zu gestalten.

Der Lösung der Aufgabe liegt die allgemeine Idee zugrunde, den Busaufbau im Gegensatz zu allen bisher bekannten Lösungen nicht starr vorzugeben. sondern ihn von Informationsübertragung zu Informationsübertragung nach Bedarf anzupassen.

Im Hinblick auf das Informationsübertragungsverfahren der eingangs genannten Art wird die Aufgabe durch die im kennzeichnenden Teil des Anspruchs 1 angegebenen Maßnahmen gelöst.
Zur Durchführung des Verfahrens weist die Baugruppe die in den Merkmalen des Anspruchs 10 angegebenen Maßnahmen auf.

Weitere Vorteile und Einzelheiten ergeben sich aus der nachfolgenden Beschreibung eines Ausführungsbeispieis, in Verbindung mit den Zeichnungen und anhand der weiteren Unteransprüche. Dabei zeigen:
FIG 1 ein Blockschaltbild eines Automatisierungsgeräts,
FIG 2 das Bussystem des Automatisierungsgeräts.
FIG 3 einen weiteren Aufbau des Automatisierungsgeräts.
FIG 4 den wesentlichen Aufbau der Busanschaltungen,
FIG 5, 6 den Aufbau von Befehlen und
FIG 7 einen Teilaufbau des Automatisierungsgeräts.

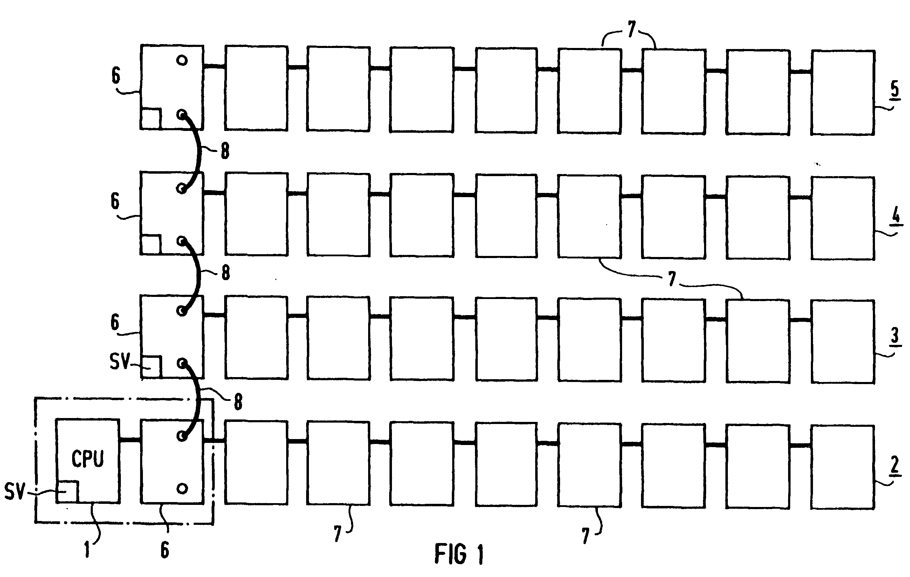

Gemäß FIG 1 besteht der maximale Ausbau eines modularen elektrischen Gerätes, hier eines Automatisierungsgerätes. aus einer Zentraleinheit 1 und vier Gruppen bzw. Strängen 2-5. Jeder Strang 2-5 besteht aus einer Schnittstelleneinheit 6 und acht Peripherieeinheiten 7. Die Peripherieeinheiten 7 sind im folgenden auch als Baugruppen bezeichnet. Den Baugruppen 7 des Stranges 2 sind stets die Adressen 0 bis 7 zugeordnet. denen des Stranges 3 die Adressen 8 bis 15 usw. Bezüglich des mechanisch-konstruktiven Aufbaus des Automatisierungsgeräts und des Bussystems wird auf die altere europäische Anmeldung 91 113 357.7 verwiesen.

Die Schnittstelleneinheiten 6 sind über mehradrige Kabel 8 miteinander verbunden. Die Kabel 8 können bis zu 20 m lang sein. so daß mittels der Kabel 8 ein vertelltes System realisierbar ist.

Die Stromversorgung des Automatisierungsgerats erfolgt strangweise. Jeder Strang 2-5 weist also eine eigene Strornversorgung SV auf. Vorzugsweise ist die Stromversorgung SV so wie in FIG 1 dargestellt. in die Schnittstelleneinneiten 6 bzw. in die Zentraleinheit 1 integriert Vorzugsweise ist auch die Schnittstelleneinheit 6 des Strangs 2 in die Zentraleinheit 1 Integriert.

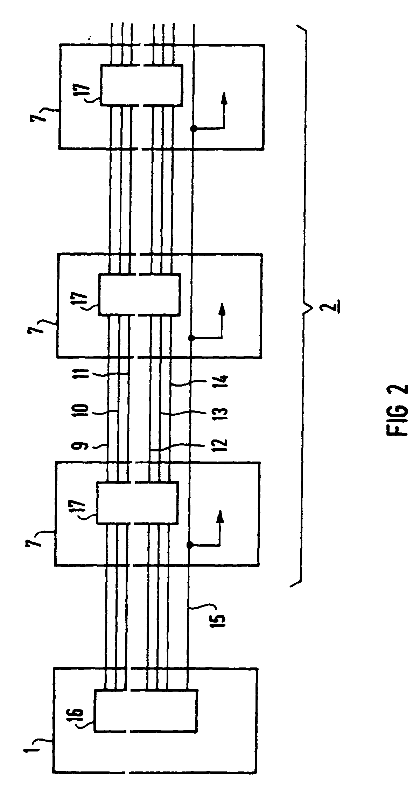

Die Kommunikation zwischen der Zentraleinheit 1 und den Peripherieeinheiten 7 erfolgt über ein Bussystem, dessen Aufbau nachstehend in Verbindung mit FIG 2 erläutert ist.

Gemäß FIG 2 weist das Bussystem des Automatisierungsgeräts sieben Leitungen auf. Es sind dies die Datenleitung 9, die Taktleitung 10, die Steuerleitungen 11, 12, die Rückmeldeleitung 13, die Alarmleitung 14 und die Freigabeleitung 15.

Die Leitungen 9 bis 15 haben folgende Funktionen:
- Über die Datenleitung 9 werden Befehle von der Zentraleinheit 1 zu den Baugruppen 7 übertragen. Weiterhin werden über die Datenleitung 9 Daten von der Zentraleinheit 1 zu den Baugruppen 7 und umgekehrt übertragen. Die Datenleitung 9 ist also eine bidirektionale Datenleitung.
- Die Taktleitung 10 übermittelt ein Taktsignal, das die Geschwindigkeit der seriellen Informationsübertragung über die Datenleitung 9 bestimmt.
- Mittels der Steuerleitungen 11 und 12 wird der momentane Buszustand festgelegt. Führen beide Leitungen 11, 12 high-Signal, so befindet sich der Bus im Ruhezustand. Geht die Steuerleitung 11 auf low, so zeigt das den Beginn einer Befehlsübertragung an. Geht die Steuerleitung 12 auf low, so bedeutet dies den Beginn einer Datenübertragung. Gehen beide Steuerleitungen 11, 12 auf low, so werden alle Busanschaltungen 17 des gesamten Automatisierungsgeräts zurückgesetzt.
- Uber die Rückmeldeleitung 13 übermitteln die Baugruppen 7 die Übernahme von Befehlen oder Daten bzw. zeigen das Ende einer Datenübertragung an.
- Über die Alarmleitung 14 können die Baugruppen 7 eine Alarmbehandlung durch die Zentraleinheit 1 anfordern.
- Mittels der Freigabeleitung 15 werden die Ausgänge von Ausgabeeinheiten an das Bussystem angekoppelt bzw. von ihm getrennt. Die Trennung der Ausgänge vom Bussystem erfolgt dabei, sowie das über die Freigabeleitung 15 übertragene Signale auf low geht. Vorzugsweise ist die Freigabeleitung 15 nur bei Funktionsmodulen und Unter-Zentraleinheiten durch die Busanschaltung 17 geführt. Dadurch ist es nämlich möglich, daß das über die Freigabeleitung 15 übertragene Signal ohne Zeitverzögerung gleichzeitig von allen an die Freigabeleitung 15 angeschlossenen Baugruppen 7 empfangen werden kann.

Das Bussystem des Automatisierungsgeräts ist offensichtlich ein serielles Bussystem. Der Prozessor 16 der Zentraleinheit 1 weist daher vorzugsweise standardmäßig eine serielle Schnittstelle auf, an die zumindest die Datenleitung 9 geführt ist. Im Prozessor 16 erfolgt selbstverständlich eine Parallelverarbeitung der Daten. Zur Datenein- bzw. -ausgabe nimmt der Prozessor 16 folglich stets eine Seriell-Parallel-Wandlung vor.

Die Peripherieeinheiten 7 sind über Busanschaltungen 17 an das Bussystem angeschlossen. Die Busanschaltungen 17 sind vorzugsweise ASICs. In diesen Busanschaltungen 17 erfolgt, ebenso wie im Prozessor 16 der Zentraleinheit 1, eine Seriell-Parallel-Wandlung der übertragenen bzw. der zu übertragenden Daten. Die ASICs 17 sind vorzugsweise integrale Bestandteile der Baugruppen-Modulteile der bereits bei FIG 1 erwähnten älteren europäischen Anmeldung 91 113 357.7.

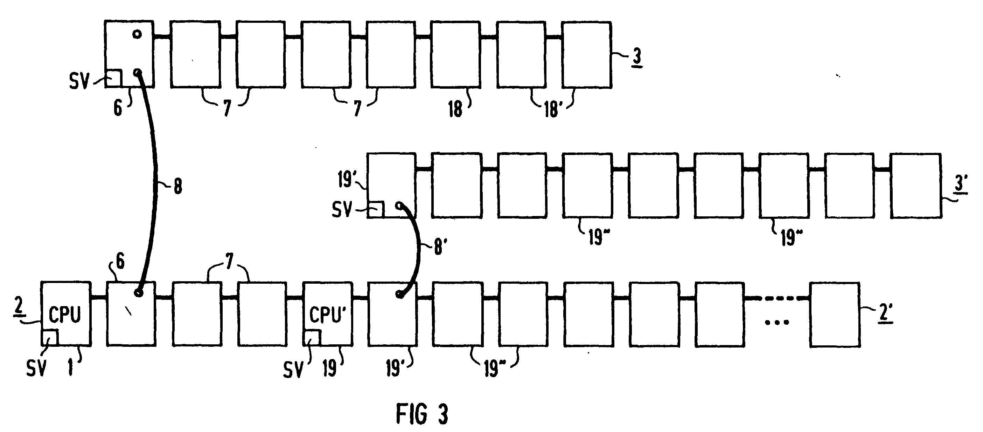

Die Leitungen 9 bis 14 sind durch die Busanschaltungen 17 hindurchgeführt. Dadurch ist es z.B. möglich, daß die Busanschaltung 17 der mittleren der drei in FIG 2 dargestellten Baugruppen 7 das Bussystem terminiert bzw. trennt, obwohl diese Baugruppe 7 nicht die letzte Baugruppe des jeweiligen Strangs ist. In welchen Fällen eine Terminierung bzw. Trennung des Bussystems sinnvoll ist, wird in Verbindung mit FIG 3 näher erläutert werden.

FIG 3 zeigt nun eine mögliche Konfiguration des Automatisierungsgeräts, in dem eine Trennung des Bussystems sinnvoll ist. Gemäß FIG 3 besteht das Automatisierungsgerät aus der Zentraleinheit 1, den Schnittstelleneinheiten 6, den Baugruppen 7, dem Funktionsmodul 18, den Baugruppen 18' und der Unter-Zentraleinheit 19. Die Wirkungsweise von Funktionsmodul 18 und Unter-Zentraleinheit 19 ist dabei wie folgt:

Das Funktionsmodul 18 ist eine intelligente Peripherieeinheit, die einen kleinen Teilprozeß selbständig führen kann. Ein Beispiel eines Funktionsmoduls ist eine Reglerbaugruppe. Um auf den Prozeß einwirken zu können und um Kenntnisse über den Prozeß zu erhalten, müssen selbstverständlich Aus- und Eingänge vorhanden sein, auf die das Funktionsmodul 18 zugreifen kann. Hierzu sind die rechts des Funktionsmoduls 18 angeordneten Baugruppen 18' vorgesehen.

Es ist offensichtlich, daß der Informationsaustausch zwischen dem Funktionsmodul 18 und den Baugruppen 18' unabhängig vom Informationsaustausch zwischen dem Rest des Automatisierungsgeräts erfolgen kann. Das Funktionsmodul 18 ist daher in der Lage, das Bussystem zu trennen und ein eigenes, lokales Bussegment zu betreiben. Die Größe dieses Bussegments ist dadurch bestimmt, daß die Summe aus Baugruppen 7 vor dem Funktionsmodul 18, Funktionsmodul 18 und Baugruppen 18' nach dem Funktionsmodul 18 die maximale Anzahl von Baugruppen pro Strang, hier acht plus Schnittstelleneinheit, nicht übersteigen darf.

Das Funktionsmodul 18 trennt das Bussystem nicht bereits beim Anlauf des Automatisierungsgeräts, sondern erst nachdem es den Befehl bzw. die Freigabe hierzu von der Zentraleinheit 1 erhalten hat. Die Zentraleinheit 1 kann daher vor der Freigabe auf die Baugruppen 18' zugreifen. Im Gegensatz dazu trennt die Unter-Zentraleinheit 19 stets das Bussystem. Die Zentraleinheit 1 weiß nur, daß die Unter-Zentraleinheit 19 vorhanden ist. Welchen Ausbaugrad das Untersystem mit der Unter-Zentraleinheit 19 besitzt, weiß die Zentraleinheit 1 nicht. Die Unter-Zentraleinheit 19 besitzt auch im Gegensatz zum Funktionsmodul 18 eine eigene Stromversorgung SV, so daß die Stromversorgung des jeweiligen Strangs von Peripherieeinheiten 7 nicht durch das Untersystem, das selbst einen Ausbau bis zu vier Schnittstelleneinheiten 19' und 32 Baugruppen 19" aufweisen kann, überlastet wird.

Selbstverständlich kann in jedem Strang 2-5 von Peripherieeinheiten 7 eine Unter-Zentraleinheit 19 oder ein Funktionsmodul 18 angeordnet sein. Ebenso können derartige Funktionsmodule 18 und Unter-Zentraleinheiten 19 auch in dem Untersystem angeordnet sein, dessen Zentraleinheit die Unter-Zentraleinheit 19 darstellt. Auf diese Art und Weise sind hierarchisch gegliederte Systeme mit vervielfachter Rechenleistung aufbaubar.

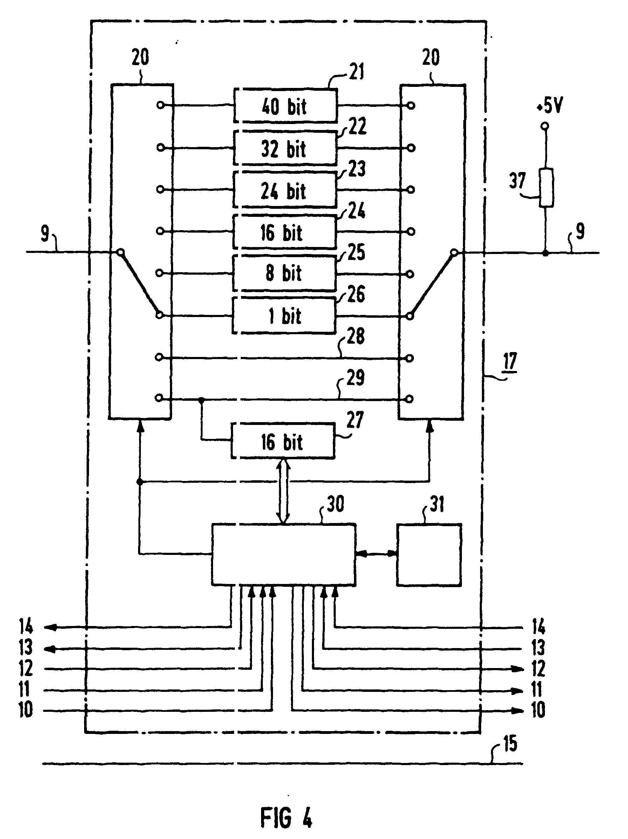

Der innere Aufbau der Busanschaltungen 17 ist vereinfacht in FIG 4 dargestelit. FIG 4 zeigt dabei nur die Teile der Busanschaltung 17, die für das Verständnis der vorliegenden Erfindung wesentlich sind. Gemäß FIG 4 wird die Datenleitung 9 in den Busanschaltungen 17 über zwei Halbleiter-Vielfachschalter 20, im folgenden auch Multiplexer 20 genannt, geführt. Mittels der Multiplexer 20 wird festgelegt, ob und gegebenenfalls welches der Register 21 bis 26 in die Datenleitung 9 hineingeschaltet wird. Wenn keines der Register 21 bis 26 in die Datenleitung 9 hineingeschaltet wird, so wird bei Datenübertragungen die Datenleitung 9 über die Leitung 28 kurzgeschlossen. Bei Befehlsübertragungen verbinden die Multiplexer 20 die Datenleitung 9 mit der Leitung 29. Dadurch wird es möglich, den übertragenen Befehl in das 16-Bit-Schieberegister 27 zu laden und ihn andererseits gleichzeitig an die nächste Busanschaltung 17 weiterzureichen.

Die Multiplexer 20 werden stets auf gleiche Art und Weise gesteuert. Die Ansteuerung erfolgt dabei durch die Auswertelogik 30. Wenn die Auswertelogik 30 über die Steuerleitung 11 erfährt, daß als nächstes ein Befehl übertragen wird, so wird stets die Leitung 29 angewählt. Geht dagegen die Steuerleitung 12 auf low, so erfolgt die Aktivierung einer der anderen Datenpfade 21 bis 26, 28. Welcher der anderen Datenpfade 21 bis 26, 28 aktiviert wird, entscheidet die Auswertelogik 30 anhand des im Register 27 gespeicherten, zuletzt übertragenen Befehls. Selbstverständlich wertet die Auswertelogik 30 dabei auch ihr Wissen über die Baugruppe 7 aus, in der sich die Busanschaltung 17 befindet. Dieses Wissen ist beispielsweise im Speicher 31 abgelegt. Alternativ dazu ist es selbstverständlich auch möglich, die Auswerteeinheit 30 entsprechend zu programmieren oder hardwaremäßig zu verdrahten.

Die Auswertelogik 30 ist selbstverständlich auch mit den Registern 21 bis 26 verbunden, damit sie Daten aus diesen Registern auslesen bzw. Daten in diese Register einspeichern kann. Bei diesen Umspeichervorgängen wird u.a. eine Seriell-Parallel-Wandlung vorgenommen. Die zugehörigen Verschaltungen sind jedoch in FIG 4 der Übersichtlichkeit halber nicht dargestellt.

Die Einstellung der Multiplexer 20 ändert sich nicht, so lange nicht ein neuer Befehl übertragen wird. Zur Informationsübertragung über das Bussystem werden über die Datenleitung 9 abwechselnd Befehle und Daten übertragen.

Daten- bzw. Befehlsübertragungen erfolgen dabei derart, daß zunächst die Befehlssteuerleitung 11 bzw. die Datensteuerleitung 12 auf low geht. Nach einer kurzen Wartezeit von ca. 1 Taktzyklus beginnt dann die Informationsübertragung. Am Ende der Informationsübertragung geht die angesteuerte Steuerleitung 11 bzw. 12 wieder auf high. Daraufhin übernehmen die Baugruppen 7 die übertragenen Informationen und legen ein low-Signal auf ihre Rückmeldeleitung 13. Dadurch weiß die Zentraleinheit 1, daß die Informationsübertragung erfolgreich abgeschlossen wurde. Erfolgt die Rückmeldung der Baugruppen 7 nicht binnen einer vorgegebenen Wartezeit von z.B. 500 ns, so wird dies als Übertragungsfehler interpretiert und die Übertragung wiederholt.

Wie obenstehend erwähnt, werten die Peripherieeinheiten 7, 18, 18', 19 und auch die Schnittstelleneinheiten 6 übertragene Befehle aus und reagieren befehlsspezifisch darauf. Dabei gibt es
- Befehle, auf die alle Baugruppen 7 des Automatisierungsgeräts, gegebenenfalls auch alle Schnittstelleneinheiten 6, reagieren,
- Befehle auf die alle oder ein Teil der Baugruppen 7 eines Stranges 2-5, gegebenenfalls auch die Schnittstelleneinheit 6 dieses Stranges, reagieren und
- Befehle, auf die nur eine einzelne Baugruppe 7 reagiert.

Letztere Befehle werden im folgenden Einzelbefehle genannt, die anderen Sammelbefehle.

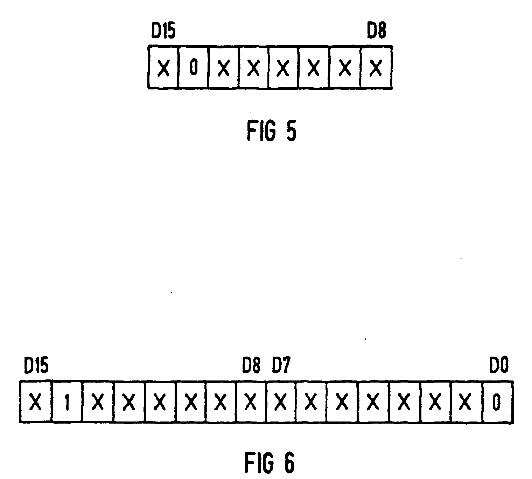

FIG 5 zeigt den Aufbau eines Sammelbefehls. Gemäß FIG 5 hat ein Sammelbefehl die Länge von 1 Byte bzw. 8 Bit. Das Bit D15 legt dabei fest, ob es sich um einen Lese- oder um einen Schreibbefehl handelt. Das Bit D14 muß Null sein, da mittels dieses Bits zwischen Einzelbefehlen (wenn das Bit D14 den Wert 1 hat) und Sammelbefehlen (wenn das Bit D14 den Wert Null hat) unterschieden wird. Mittels der Bits D13 und D12 wird festgelegt, auf welchen der vier Stränge 2-5 des Automatisierungsgeräts zugegriffen werden soll. Die Bits D11 bis D8 bestimmen den auszuführenden Befehl, z. B. Prozeßabbild Lesen bzw. Schreiben.

Da die Eigenschaft "Lesen" bzw. "Schreiben" bereits durch das Bit D15 festgelegt ist, können insgesamt 32 verschiedene Befehle realisiert werden. Beispiele solcher Befehle sind "Prozeßabbild Eingänge einlesen", "Prozeßabbild Ausgänge ausgeben" und "Busausbau lesen".

FIG 6 zeigt den Aufbau eines Einzelbefehls. Die Bedeutung der Bits D15 bis D12 wurde bereits für den Sammelbefehl beschrieben. Die Bits D11 bis D9 legen fest, auf welche Baugruppe 7 des selektierten Stranges 2-5 zugegriffen werden soll. Die Bits D8 bis D1 definieren diesen Zugriff im Detail. Auch hier wird wieder zusätzlich die Information des Bits D15 ausgewertet, die festlegt, ob es sich um einen Lese- oder um einen Schreibzugriff handelt. Typische Befehle sind beispielsweise die Befehle "Datenblock schreiben" bzw. "Datenblock lesen", das Freigeben eines Bussegments für ein Funktionsmodul oder Byte-/Wort-/Doppelwort-Zugriffe oder die Alarmquittierung.

Das Bit D0 ist stets Null. Dadurch ist es für die Baugruppen 7 möglich, fehlerhafte Befehlsübertragungen zu erkennen. Eine derartige Fehlererkennung ist im Prinzip auch für Sammelbefehle möglich. In diesem Fall müßten jedoch auch Sammelbefehle mit der vollen Länge von 16-Bit übertragen werden. Die Bits D7 bis D1 sind dann bedeutungslos. Das Bit D0 hat als Rahmenkennung wieder den Wert Null. Alternativ kann das Bit D0 auch ein Paritätsbit sein.

Wenn Sammelbefehle in Kurzform, d.h. mit 8 Bit Länge, übertragen werden, ist ebenfalls noch eine eingeschränkte Fehlererkennung möglich. Wenn die Befehlssteuerleitung 11 auf low geht, werden nämlich alle Bit D0 bis D15 des Befehlsregisters 27 mit Ausnahme des Bits D8 auf Eins gesetzt. Das Bit D8 wird von der Auswertelogik 30 auf Null gesetzt. Wenn ein Sammelbefehl über die Datenleitung 9 übertragen wird, ist nach einer Datenübertragung von 8 Bit der Wert des Bits D0 eine Null. Auf diese Art kann kontrolliert werden, ob eine richtige Anzahl von Bits, nämlich 8, übertragen wurde.

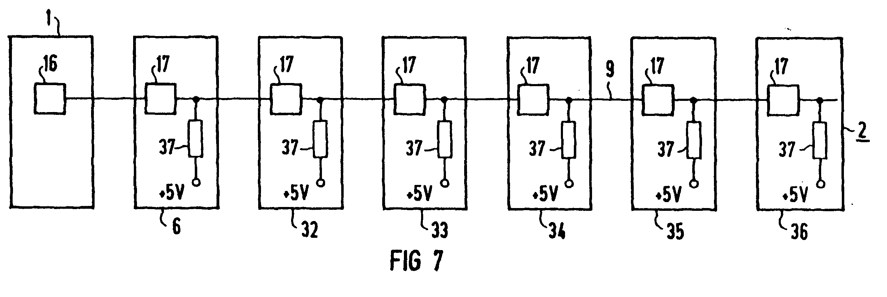

Nachfolgend werden nunmehr beispielhaft mehrere typische Befehls-/Datenübertragungen beschrieben. Zur Erläuterung dieser Befehls-/Datenübertragungen wird auf FIG 7 verwiesen. Gemäß FIG 7 besteht der Strang 2 des Automatisierungsgeräts aus der Schnittstelleneinheit 6 und mehreren Baugruppen 32 bis 36.

Die Baugruppe 32 ist eine 16-Bit-Digitaleingabebaugruppe.
Die Baugruppe 33 ist eine 16-Bit-Digitalausgabebaugruppe.
Die Baugruppe 34 ist eine 8-Bit-Digitaleingabebaugruppe.
Die Baugruppe 35 ist eine 8-Bit-Digitalausgabebaugruppe.
Die Baugruppe 36 ist ein Funktionsmodul.

Beim Hochlauf des Automatisierungsgeräts wird zunächst der Befehl "Ausbaugrad einlesen" für den Strang 2 ausgegeben. Der Befehl "Ausbaugrad einlesen" ist ein Sammelbefehl, der auf den selektierten Strang, hier den Strang 2, wirkt. Er bewirkt, daß in jeder vorhandenen Baugruppe des Stranges 2 das Schieberegister 26 mit dem Wert Null in die Datenleitung 9 geschaltet wird.

Da die Datenleitung 9 auf der der Zentraleinheit 1 abgewandten Seite der Busanschaltungen 17 über Pull-Widerstände 37 mit der Versorgungsspannung verbunden ist, wird von der letzten Baugruppe 36 zwar ein Null-Bit als Meldung für die eigene Baugruppe 36 ausgegeben, danach werden aber stets 1-Bits weitergereicht. Der Grund dafür ist, daß der Pull-Widerstand 37 dieser Baugruppe 36 die Datenleitung 9 auf der der Zentraleinheit 1 abgewandten Seite stets auf Eins hält.

Die Zentraleinheit 1 liest ein Wort, d.h. 16 Bit, aus dem angesprochenen Strang 2 als Daten ein. Die Zahl der eingelesenen Null-Bits gibt die Zahl der Peripherieeinheiten des Stranges 2 an. Die Schnittstelleneinheit 6 wird dabei für das Lesen des Ausbaugrades als Peripherieeinheit mitgezählt.

Aufgrund der obenstehend beschriebenen Ermittlung des Ausbaugrades weiß die Zentraleinheit 1, daß im gegebenen Ausführungsbeispiel im Strang 2 fünf Baugruppen 32 bis 36 und die Schnittstelleneinheit 6 mit ihr verbunden sind. Diese Information, nämlich sechs angeschlossene Einheiten, wird bereits bei der Ausführung des nächsten Befehls von der Zentraleinheit 1 ausgenützt.

Zur Identifizierung der an die Zentraleinheit 1 angeschlossenen Einheiten wird nunmehr für jeden Strang, im gegebenen Beispiel also für den Strang 2, die Typkennung der angeschlossenen Einheiten ermittelt. Hierzu gibt die Zentraleinheit 1 den Sammelbefehl "Typkennung übermitteln" für den Strang 2 aus und liest sodann als Daten pro angeschlossener Einheit zwei Byte ein, im vorliegenden Fall also 12 Byte. Die Baugruppen 32 bis 36 und die Schnittstelleneinheit 6 schalten ihre Busanschaltungen 17 derart, daß das 16-Bit-Schieberegister 24 ausgelesen wird. In diesem Register 24 wurde zuvor die Typkennung abgespeichert, die in jeder Einheit in einem Typkennungsregister remanent abgespeichert ist. In den Typkennungsregistern der Einheiten ist beispielsweise abgespeichert, wie groß die Adreßräume für Eingänge und Ausgänge sind und um welche Art von Baugruppe es sich handelt (z.B. Schnittstelleneinheit, Analog-Eingabebaugruppe, Digital-Ausgabebaugruppe usw.).

Als nächstes nimmt die Zentraleinheit 1 eine Parametrierung der Baugruppen 32 bis 36 vor. Bisher wußten die einzelnen Baugruppen 7 beispielsweise nicht, auf welchem Steckplatz sie angeordnet sind, welche Adresse ihnen also zugeordnet ist.

Zum Parametrieren der einzelnen Baugruppen gibt die Zentraleinheit 1 den Sammelbefehl "Parameter übernehmen" für den Strang 2 aus. Sodann gibt sie als Daten zwei Byte pro Baugruppe aus. Die Daten werden wieder durch die 16-Bit-Schieberegister 24 in den Busanschaltungen 17 hindurchgeführt und nach Ende der Datenübertragung mittels Seriell-Parallel-Wandlung in die Baugruppen 32 bis 36 übernommen. Die übertragenen Parameter umfassen zumindest die Adressen, unter denen die Baugruppen 32 bis 36 später ansprechbar sind sowie ein Bit, ob diese Adressen gültig sind. Weiterhin werden den Baugruppen 32 bis 36 noch weitere Parameter vorgegeben, z.B. ob sie alarmfähig sind, ob sie beim Prozeßabbild-Transfer eine Rahmenkennung mit ausgeben bzw. einlesen sollen und wie sie sich bei einem Sperren der Freigabeleitung 15 verhalten sollen.

Im Gegensatz zum Einlesen des Ausbaugrades und des Übermittelns der Typkennung schaltet beim Parametrieren der Baugruppen 32 bis 36 die Schnittstelleneinheit 6 die Datenleitung 9 durch. Grund hierfür ist, daß die Schnittstelleneinheiten 6 selbstadressierend sind. Wenn eine Schnittstelleneinheit neu zum System hinzukommt, meldet sie sich nämlich sofort bei der Schnittstelleneinheit 6, die ihr vorgeschaltet ist. Von dieser Schnittstelleneinheit 6 erfährt sie dann ihre Anordnung im Automatisierungsgerät. Ab der Kontaktaufnahme mit der vorgeschalteten Schnittstelleneinheit 6 weiß die Schnittstelleneinheit 6 also, ob ihr die Strangadresse 00₂ (für Strang 2), 01₂ (für Strang 3), 10₂ (für Strang 4) oder 11₂ (für Strang 5) zugeordnet ist.

Die obenstehend in Verbindung mit FIG 7 beschriebene Selbstkonfigurierung des Automatisierungsgeräts erfolgt nacheinander für alle Stränge 2-5. Nach Beendigung des Gerätehochlaufs kennt die Zentraleinheit 1 folglich die Anzahl und Gruppierung der an sie angeschlossenen Peripherieeinheiten 6,7,18,19,32 bis 36.

Nach dem vorstehend beschriebenen Anlauf des Automatisierungsgeräts erfolgt der Normalbetrieb mit Prozeßabbild-Transfer, Prozeßalarmen, Alarmbehandlung, Analog-Ein-/Ausgabe usw. Nachstehend ist beispielhaft der Prozeßabbild-Transfer der Eingänge und der Ausgänge beschrieben.

In dem in FIG 7 gezeigten Beispiel sind im Strang 2 des Automatisierungsgeräts zwei Digital-Eingabebaugruppen angeordnet, nämlich die Baugruppe 32 und die Baugruppe 34. Die Baugruppe 32 weist 16 Eingänge auf, die Baugruppe 34 acht. Der Zentraleinheit 1 ist dieser Sachverhalt aufgrund des obenstehend beschriebenen Geräteanlaufs bekannt.

Die Baugruppe 32 hat nach der Übertragung des Sammelbefehls "Prozeßabbild Eingänge einlesen" die in die Zentraleinheit 1 einzulesenden Daten von ihren Prozeßeingängen abgefragt und im 16-Bit-Schieberegister 24 abgespeichert. In analoger Weise hat die Baugruppe 34 ihre Eingangsdaten im 8-Bit-Schieberegister 25 abgespeichert.

Nach Vorgabe des entsprechenden Befehls beginnt die Zentraleinheit 1 mit dem Einlesen der Daten. Beim Einlesen der Daten in die Zentraleinheit 1 schalten die Baugruppen 32, 34 ihre Schieberegister in die Datenleitung 9. Die anderen Baugruppen 33, 35, 36 schalten die Datenleitung 9 durch. Auf den Befehl "Prozeßabbild Eingänge einlesen" reagieren also nur die Digital-Eingabebaugruppen 32, 34 des Stranges 2. Die in die Zentraleinheit 1 eingelesenen Daten sind daher ausnahmslos Nutzdaten, da die Baugruppen 33, 35, 36 ohne Digitaleingänge keine Daten in die Datenleitung 9 einspeisen. Die Zentraleinheit 1 liest daher nur drei Byte Daten ein, nämlich zwei Byte für die Baugruppe 32 und 1 Byte für die Baugruppe 34. Selbstverständlich erfolgt die gleiche Vorgehensweise auch für die Stränge 3 bis 5.

Analog erfolgt der Prozeßabbild-Transfer für die Ausgänge. Auch hier kennt die Zentraleinheit 1 aufgrund des vorangegangenen Identifikationslaufes die Konfiguration der Stränge 2-5 und weiß daher, wie groß. die auszugebende Datenlänge ist. Die Digital-Ausgabebaugruppen 33, 35 schalten ihre Schiebregister mit 8, 16 bzw. 32 Bit (je nach Zahl der Ausgabekanäle) in die Datenleitung 9, die anderen Baugruppen 32, 34, 36 schalten die Datenleitung 9 durch. Beim Prozeßabbild-Transfer der Ausgänge werden daher ebenfalls nur Nutzdaten übertragen, keine Leerdaten. Auch hier werden nacheinander alle Stränge 2 bis 5 angesprochen.

Die Baugruppen 32 bis 35 sind derart parametrierbar, daß sie beim Prozeßabbild-Transfer eine Rahmenkennung aussenden bzw. empfangen. Beim Prozeßabbild-Transfer besteht die Rahmenkennung aus einem Byte mit vorgegebenem Bitmuster. Dieses Byte wird beim Einlesen der Eingänge in der Zentraleinheit 1 mit dem vorgeschriebenen Bitmuster verglichen. Umgekehrt wird beim Ausgeben der Prozeßausgänge das von den Baugruppen 33, 35 empfangene Byte auf das vorgeschriebene Bitmuster hin überprüft. Mittels dieser Rahmenkennung sind Übertragungsfehler detektierbar.

Wenn die Baugruppen 32 bis 35 ihr Byte Rahmenkennung mit einspeisen bzw. abfragen, erfolgt die Datenübertragung über Register, die 8 Bit länger sind als Ein-/Ausgänge auf der Baugruppen vorhanden sind. Eine 16-Bit-Digital Eingabebaugruppe sendet also beispielsweise beim Prozeßabbild-Transfer der Eingänge 24 Bit, nämlich 16 Bit Nutzdaten zuzüglich 8 Bit Rahmenkennung.

Zur Erläuterung der Alarmbehandlung ist nachstehend angenommen, daß das Funktionsmodul 36 ein Grenzwertmelder ist, also eine Baugruppe, die das Über- oder Unterschreiten eines Grenzwertes meldet.

Wenn das zu überwachende Signal in einen kritischen Bereich kommt, sendet die Baugruppe 36 einen Alarm über die Alarmleitung 14 zur Zentraleinheit 1. Die Zentraleinheit 1 weiß zunächst nicht, welche Baugruppe den Alarm ausgelöst hat und was für ein Alarm vorliegt. Dies Zentraleinheit 1 gibt daher den Befehl "Alarme einlesen" aus. Jede Baugruppe des angesprochenen Strangs schaltet ihr 1-Bit-Register 26 in die Datenleitung 9. Wenn die jeweilige Baugruppe 32 bis 36 keinen Alarm auslöste, hat ihr Datenbit den Wert Eins, ansonsten Null.

Die Zentraleinheit 1 liest 1 Byte ein und kann dadurch bestimmen, welche Baugruppe einen Alarm ausgelöst hat.

Sodann gibt die Zentraleinheit 1 den Sammelbefehl "Alarmarten einlesen" aus. Die Baugruppen, die einen Alarm ausgelöst haben, schalten daraufhin ihr 8-Bit-Register 25 in die Datenleitung 9. Die anderen Baugruppen schalten die Datenleitung 9 durch.

Im Register 25 wurden von den alarmauslösenden Baugruppen zuvor die Alarmarten abgespeichert, die bei ihnen anstehen.

Die Zentraleinheit kann also durch Auswertung der eingelesenen Bytes feststellen, welche Alarme bei welcher Baugruppe vorliegen. Die Reihenfolge der Alarmbehandlung und damit auch die Priorität der Alarme ist damit noch nicht festgelegt. Sie ist programmspezifisch, evtl. sogar vom Anwender vorgebbar.

Beispiele möglicher Alarme sind Prozeßalarme und Diagnosealarme.

Prozeßalarme sind Alarme, die von Eingabebaugruppen ausgelöst werden, wenn diesen Baugruppen Eingangssignale zugeführt werden, die eine sofortige Reaktion der Zentraleinheit 1 erfordern.

Diagnosealarme werden ausgelöst, wenn die Baugruppen aufgrund ihrer Selbstüberwachungseigenschaften feststellen, daß Fehlfunktionen innerhalb der Baugruppe bzw. bei deren Verdrahtung zum Prozeß vorliegen müssen.

Bei Diagnosealarmen und auch beim Parametrieren von Funktionsmodulen müssen manchmal größere Datenmengen übertragen werden. Hierfür kennt das Automatisierungsgerät die Einzelbefehle "Datenblock Anfangsadresse und Länge laden" und "Datenblock schreiben" bzw. "Dalenblock lesen".

Mittels des Befehls "Datenblock Anfangsadresse und Länge laden" wird eine einzelne Baugruppe adressiert. Diese Baugruppe, z.B. das Funktionsmodul 36, schaltet daraufhin ihr Register 24 in die Datenleitung 9. Sodann überträgt die Zentraleinheit 16 Bit, anhand derer das Funktionsmodul 16 weiß, wieviele Worte übertragen werden sollen und wo die Anfangsadresse der zu übertragenden Worte im Adreßbereich des Funktionsmoduls 36 liegt. Die anderen Baugruppen 32 bis 35 schalten bei der Datenübertragung die Datenleitung durch.

Sodann überträgt die Zentraleinheit 1 den Einzelbefehl "Datenblock lesen" bzw. "Datenblock schreiben". Es wird sodann mit einer kontinuierlichen Übertragung des zu übertragenden Datenblocks begonnen. Nach jeweils 16 Bit übernimmt das Funktionsmodul 36 das zuletzt eingelesene Datenwort aus dem Register 24 bzw. speichert das nächste zu übertragende Datenwort im Register 24 ab. Die anderen Baugruppen 32 bis 35 schalten bei der Datenübertragung die Datenleitung durch.

Zusätzlich zu obenstehend beschriebenen Einzelbefehlen und auf einen Strang 2-5 wirkenden Sammelbefehlen gibt es auch Sammelbefehle, die auf alle Stränge 2-5 gleichzeitig wirken. Ein Beispiel eines solchen Befehls ist die Netz-Aus-Warnung. Wenn in der Zentraleinheit 1 ein Einbruch der Versorgungsspannung detektiert wird, so wird dieser Befehl (vorzugsweise als 8-Bit-Befehl) ausgegeben. Unabhängig vom Wert der Bits D13 und D12 wird dieser Sammelbefehl nicht nur von den Baugruppen 7 in allen vier Strängen 2-5 empfangen und ausgewertet. Es reagieren auch alle betroffenen Baugruppen 7 in allen vier Strängen 2-5 darauf. Die Reaktion der Baugruppen 7 kann z.B. darin bestehen, daß wichtige Daten in EEPROMs geschrieben werden, solange die Versorgungsspannung noch gepuffert werden kann.

Wie obenstehend anhand von Beispielen eingehend erläutert, steht hiermit erstmals ein leistungsfähiges Automatisierungsgerät mit einem seriellen Rückwandbus zur Verfügung. Selbstverständlich ist die vorliegende Erfindung aber nicht auf das gegebene Ausführungsbeispiel beschränkt. So ließen sich beispielsweise andere Konfigurationen des Automatisierungsgeräts, der Busanschaltung, der Befehlsätze und dgl. mehr realisieren, ohne den Schutzumfong der Patentansprüche zu verlassen.

## Patentansprüche

1. Informationsübertragungsverfahren zur Ubertragung digitaler Informationen zwischen einer Zentraleinheit (1) und einer Anzahl von der Zentraleinheit (1) untergeordneten Baugruppen (7) eines modularen Automatisierungsgerats.
- wobei die Informationsübertragung über ein serielles Bussystem erfolgt, das mindestens eine Datenleitung (9) zum Übertragen der Informationen. eine Taktleitung (10) zur Vorgabe eines gemeinsamen Systemtaktes und mindestens eine Steuerteitung (11 bzw. 12) zum Übertragen von Steuersignalen aufweist, wobei zumindest die Datenleitung (9) durch die Baugruppen (7) hindurchgeführt ist dadurch gekennzeichnet, daß die Informationen Befehle und Daten umfassen,
- über die Datenleitung (9) abwechselnd Befehle und Daten übertragen werden.
- bei der Übertragung von Befehlen die Baugruppen (7) die Datenleitung (9) überbrücken und ein Schieberegister (27), zur Abspeicherung eines über die Datenleitung (9) übertragenen Befehls. an die Datenleitung (9) ankoppeln und
- bei der Übertragung von Daten die Baugruppen (7) in Abhängigkeit vom zuletzt übertragenen Befehl entweder ein Schieberegister (21 bis 26) in die Datenleitung (9) einschleiten oder die Datenleitung (9) überbrücken.

2. Informationsübertragungsvertahren nach Anspruch 1, **dadurch gekennzeichnet**, daß die Längen der in die Datenleitung (9) eingeschleiften Schieberegister (21 bis 26) befehls- und/oder baugruppenspezifisch sind.

3. Informationsübertragungsverfahren nach einem der obigen Ansprüche. **dadurch gekennzeichnet.** daß bei einem Teil der Befehle, sogenannten Einzelbefehlen. eine einzige Baugruppe (z. B. 36) ihr Schieberegister (21 bis 26) in die Datenfeitung (9) einschleift und alle anderen Baugruppen (z. B. 32 bis 35) die Datenteitiung (9) überbrucken

4. Informationsübertragungsverfahren nach einem der obigen Ansorücne, **dadurch gekennzeichnet.** daß bei einem Teil der Befente, sogenannten Sammelbefehlen, mehrere der angeschlossenen Baugruppen (32 bis 36) insbesondere alle angeschlossenen Baugruppen (32 bis 36), ihre Schieberegister (21 bis 26) in die Datenleitung (9) einschleifen.

5. Informationsübertragungsverfahren nach Anspruch 3 und 4, **dadurch gekennzeichnet**, daß Sammelbefehle kürzer als Einzelbefehle sind.

6. Informationsübertragungsverfahren nach Anspruch 5, **dadurch gekennzeichnet,** daß Sammelbefehle eine Länge von 8 Bit und Einzelbefehle eine Länge von 16 Bit aufweisen.

7. Informationsübertragungsverfahren nach einem der obigen Ansprüche,
**dadurch gekennzeichnet,**
- daß die Datenieitun (9) in den Baugruppen (7) auf der von der Zentraleinheit (1) abgewandten Seite im Ruhezustand der Datenleitung (9) auf einem definierten Pegel gehalten wird, z.B. über Pullwiderstände (37),
- daß die Zentraleinheit (1) bei einem Geräteanlauf einen Befehl zur Ermittlung der Anzahl. gegebenenfalls auch der Gruppierung, der angeschlossenen Untereinheiten (7) an die Baugruppen (7) übermittelt.
- daß die Baugruppen (7) nach der Übermittlung des Befehls eines (26) ihrer Schieberegister (21 bis 26), vorzugsweise das Schieberegister (26) mit der kürzesten von Null verschiedenen Registerlänge, in die Datenleitung (9) einschleifen, wobei der Wert mindestens eines der Bits des in die Datenleitung (9) eingeschleiften Schieberegisters (26) einen Wert aufweist, der von dem durch den definierten Pegel (+5V) bestimmten Wert verschieden ist. und
- daß die Zentraleinheit (1) eine Anzahl von Bits über die Datenleitung (9) einliest, wobei die Anzahl von Bits durch das Produkt aus der Registerlänge des in die Datenleitung (9) eingeschleiften Schieberegisters (26) und der aximal zulässigen Anzahl von Baugruppen (7) bestimmt ist.

8. Informationsübertragungsvertahren nach Anspruch 7.
**dadurch gekennzeichnet.**
- daß nach Ermittlung der Anzahl der angeschlossenen Baugruppen (7) die Zentraleinheit (1) einen Befehl zum Übermitteln uniereinheitenspezifischer Kenndaten an die Baugruppen (7) ausgibt,
- daß die Baugruppen (7) daraufhin die baugruppenspezifischen Kenndaten in eines (24) der Schieberegister (21 bis 26) einspeichern und dieses Schieberegister (24) in die Datenleitung (9) einschleifen und
- daß die Zentraleinheit (1) bei der darauffolgenden Datenübertragung eine Anzahl von Bits einliest, wobei die Anzahl von Bits durch das Produkt der Registerlänge des in die Datenleitung (9) eingeschleiften Schieberegisters (24) und die Anzahl der angeschlossenen Baugruppen (7) bestimmt ist.

9. Informationsübertragungsverfahren nach Anspruch 8,
**dadurch gekennzeichnet,**
- daß nach der Übermittlung der untereinheitenspezifischen Kenndaten die Zentraleinheit (1) einen Befehl zum Empfangen von Betriebsparametern an die Baugruppen (7) ausgibt,
- daß die Baugruppen (7) daraufhin eines (24) der Schieberegister (21 bis 26) in die Datenleitung (9) einschieifen
- daß die Zentraleinheit (1) bei der darauffolgenden Datenübertragung eine Anzahl von Bits ausgibt. wobei die Anzahl von Bits durch das Produkt der Registerlänge des in die Datenieitung (9) eingeschleiften Schieberegisters (24) und die Anzahl der angeschlossenen Baugruppen (7) bestimmt ist und
- daß die Baugruppen (7) nach beendeter Datenübertragung die in das in die Datenleitung (9) eingeschleifte Schieberegister (24) eingespeicherten Betriebsparameter auslesen und sich gemäß dieser Betriebsparameter parametrieren.

10. Baugruppe für ein modulares Automatisierungsgerät, wobei die Baugruppe (7) über ein serielles Bussystem mit einer Zentraleinheit (1) und weiteren Baugruppen (7) verbindbar ist, wobei die Baugruppe (7) an mindestens eine Datenleitung (9) zum Übertragen von Informationen, an eine Taktleitung (10) zur Vorgabe eines gemeinsamen Systemtaktes und an mindestens eine Steuerleitung (11 bzw. 12) zum Übertragen von Steuersignalen angeschlossen ist,
- wobei die Baugruppe (7) über eine Busanschaltung (17) an das Bussystem anschließbar ist,
- wobei zumindest die Datenleitung (9) durch die Busanschaltung (17) hindurchgeführt ist,
- wobei die Busanschaltung (17) mindestens ein Schieberegister (21 bis 26) und Mittel (20) zum Einschleifen des Schieberegisters (21 bis 26) in die Datenleitung (9) aufweist,
**dadurch gekennzeichnet,** daß
die Busanschaltung (17) aufweist
- Mittel (20) zum Kurzschließen der Datenleitung (9) sowie ein weiteres Schieberegister (27) zur Abspeicherung eines über die Datenleitung (9) übertragenen Befehls, welcher zumindest zur Beeinflussung der Mittel (20) zum Einschleifen des Schieberegisters (21 bis 26) oder der Mittel (20) zum Kurzschließen der Datenleitung (9) wirksam ist, und
- Mittel (20), welche bei der Befehlsübertragung das weitere Schieberegister (27) an die Datenleitung (9) ankoppeln und die Datenleitung (9) überbrücken.

11. Baugruppen nach Anspruch 10, **dadurch gekennzeichnet,** daß die Busanschaltung (17) mehrere Schieberegister (21 bis 26) mit voneinander verschiedenen Registerlängen und Mittel (20) zum Einschleifen der Schieberegister (21 bis 26) in die Datenleitung (9) aufweist.

12. Baugruppe nach Anspruch 11, **dadurch gekennzeichnet,** daß die Registerlängen 0 Bit, 1 Bit und ganzzahlige Vielfache von 8 Bit sind.

13. Baugruppe nach einem der Ansprüche 10 bis 12, **dadurch gekennzeichnet,** daß die Busanschaltung (17) einen Seriell-Parallel-Wandler aufweist.

14. Baugruppe nach einern der Ansprüche 10 bis 13, **dadurch gekennzeichnet,** daß das Bussystem mindestens eine Zusatzsteuerieitung (12 bzw. 11) aufweist.

15. Baugruppe nach einem der Ansprüche 10 bis 14, **dadurch gekennzeichnet,** daß das Bussystem mindestens eine Rückmeideleitung (13) zum Rückmelden von Signalen von der Baugruppe (7) an die Haupteinheit (1) aufweist.

16. Baugruppe nach Anspruch 15, **dadurch gekennzeichnet,** daß das Bussystem zusätzlich eine Alarmleitung (14) zum Melden von von der Baugruppe (7) ausgelösten Alarmen an die Haupteinheit (1) aufweist.

17. Baugruppe nach einem der Ansprüche 10 bis 16, **dadurch gekennzeichnet,** daß auch die Steuerleitung (11 bzw. 12), gegebenenfalls auch die Zusatzsteuerleitung (12 bzw. 11), die Rückmeldeleitung (13) und die Alarmleitung (14), vorzugsweise auch die Taktleitung (10). durch die Busanschaltung (17) hindurchgeführt ist bzw. sind. so daß die Busanschaltung (17) das Bussystem terminieren kann

18. Baugruppe nach einem der Ansprüche 10 bis 17. **dadurch gekennzeichnet,** daß das Bussystem eine Freigabeleitung (15) aufweist. mittels derer die Ausgänge von Ausgabeeinheiten (33.35) an das Bussystem ankoppelbar bzw vom Bussystem trennbar sind.

19. Baugruppe nach Anspruch 17 und 18, **dadurch gekennzeichnet,** daß die Freigabeleitung (15) nur bei Baugruppen (18,19,36), die das Bussystem terminieren können, durch die Busanschaltung (17) geführt ist, so daß das über die Freigabeleitung (15) übertragene Freigabe- bzw. Sperrsignal von allen Ausgabeeinheiten (33,35) des elektrischen Geräts gleichzeitig abgreifbar ist.

20. Baugruppe nach einem der Ansprüche 10 bis 19, **dadurch gekennzeichnet**, daß die Busanschaltung (17) ein ASIC ist.

21. Baugruppe nach einem der Ansprüche 10 bis 20, **dadurch gekennzeichnet**, daß die Datenleitung (9) in der Baugruppen (7) zumindest auf der der Zentraleinheit (1) abgewandten Seite mit einem Pull-widerstand (37) verbunden ist.

22. Modulares Automatisierungsgerät, bestehend aus einer Zentraleinheit (1) und einer Anzahl von (7) Baugruppen nach einem der Ansprüche 10 bis 21.

23. Automatisierungsgerät Anspruch 22, **dadurch gekennzeichnet,** daß die Zentraleinheit (1) einen Prozessor (16) mit einer seriellen Schnittstelle aufweist und daß das Bussystem an die serielle Schnittstelle des Prozessors (16) angeschlossen ist.

24. Automatisierungsgerät nach Anspruch 22 oder 23, **dadurch gekennzeichnet**, daß die Baugruppen (7) zu mehreren parallelgeschalteten Gruppen (2 bis 5) zusammenfaßbar sind, wobei die Gruppen (2 bis 5) getrennt voneinander ansprechbar sind.

25. Automatisierungsgerät nach Anspruch 24, **dadurch gekennzeichnet,** daß zwischen den Gruppen (2 bis 5) und der Zentraleinheit (1) mindestens eine Schnittstelleneinheit (6) angeordnet ist.

26. Automatisierungsgerät nach Anspruch 25, **dadurch gekennzeichnet,** daß jeder Gruppe (2 bis 5) eine eigene Schnittstelleneinheit (6) zugeordnet ist.

27. Automatisierungsgerät nach Anspruch 24, 25 oder 26, **dadurch gekennzeichnet,** daß die Gruppen (2 bis 5) voneinander beabstandet anordenbar sind.

28. Automatisierungsgerät nach einem der Ansprüche 24 bis 27, **dadurch gekennzeichnet**, daß die Gruppen (2 bis 5) jeweils eine eigene Stromversorgung (SV) aufweisen.

29. Automatisierungsgerät nach Anspruch 28, **dadurch gekennzeichnet**, daß die Stromversorgungen (SV) in die Schnittstelleneinheiten (6) integriert sind.

## Claims

1. An information transmission process for the transmission of digital information between a central unit (1) and a number of assemblies (7), subordinate to the central unit (1), of a modular automation device,
- where the information transmission takes place via a serial bus system comprising at least one data line (9) for the transmission of the information, a clock line (10) for the presetting of a common system clock and at least one control line (11 and 12) for the transmission of control signals, where at least the data line (9) extends through the assemblies (7),
characterised in that
- the information comprises commands and data,
- commands and data are transmitted alternately via the data line (9),
- in the case of the transmission of commands the assemblies (7) bridge the data line (9) and couple to the data line (9) a shift register (27) for the storage of a command transmitted via the data line (9) and
- in the case of the transmission of data, in dependence upon the last transmitted command, the assemblies (7) either loop a shift register (21 to 26) into the data line (9) or bridge the data line (9).

2. An information transmission process as claimed in Claim 1, characterised in that the lengths of the shift registers (21 to 26) looped into the data line (9) are command-specific and/or assembly-specific.

3. An information transmission process as claimed in one of the above claims, characterised in that in the case of a part of the commands, so-called individual commands, one single assembly (e.g. 36) loops its shift register (21 to 26) into the data line (9) and all the other assemblies (e.g. 32 to 35) bridge the data line (9).

4. An information transmission process as claimed in one of the above claims, characterised in that in the case of a part of the commands, so-called collective commands, several of the connected assemblies (32 to 36), in particular all the connected assemblies (32 to 36), loop their shift registers (21 to 26) into the data line (9).

5. An information transmission process as claimed in Claim 3 and 4, characterised in that collective commands are shorter than individual commands.

6. An information transmission process as claimed in Claim 5, characterised in that collective commands have a length of 8 bits and individual commands have a length of 16 bits.

7. An information transmission process as claimed in one of the above claims, characterised in that
- in the assemblies (7) on the side facing away from the central unit (1) the data line (9) is maintained at a determinate level, for example via pull resistors (37), when the data line (9) is in the rest state,
- on the starting up the central unit (1) transfers to the assemblies (7) a command for determining the number, optionally also the grouping, of the connected assemblies (7),
- following the transmission of the command, the assemblies (7) loop one (26) of their shift registers (21 to 26), preferably the shift register (26) with the shortest register length differing from zero, into the data line (9), where the value of at least one of the bits of the shift register (26) looped into the data line (9) has a value which differs from the value determined by the defined level (+5V) and
- the central unit (1) reads in a number of bits via the data line (9), where the number of bits is determined by the product of the register length of the shift register (26) looped into the data line (9) and the maximum permissible number of assemblies (7).

8. An information transmission process as claimed in Claim 7, characterised in that
- following the determination of the number of connected assemblies (7) the central unit (1) emits a command for the transmission of assembly-specific identification data to the assemblies (7),
- the assemblies (7) then input the assembly-specific identification data into one (24) of the shift registers (21 to 26) and loop this shift register (24) into the data line (9) and
- in the following data transmission the central unit (1) reads in a number of bits, where the number of bits is determined by the product of the register length of the shift register (24) looped into the data line (9) and the number of connected assemblies (7).

9. An information transmission process as claimed in Claim 8, characterised in that
- following the transmission of the assembly-specific identification data, the central unit (1) emits a command for the reception of operating parameters to the assemblies (7),
- the assemblies (7) then loop one (24) of the shift registers (21 to 26) into the data line (9),
- in the following data transmission the central unit (1) emits a number of bits, where the number of bits is determined by the product of the register length of the shift register (24) looped into the data line (9) and the number of connected assemblies (7) and
- following the completion of the data transmission the assemblies (7) read out the operating parameters input into the shift register (24) looped into the data line (9) and parameterize themselves in accordance with these operating parameters.

10. An assembly for a modular automation device, where the assembly (7) can be connected via a serial bus system to a central unit (1) and to further assemblies, where the assembly (7) is connected to at least one data line (9) for the transmission of information, to a clock line (10) for the presetting of a common system clock and to at least one control line (11 and 12) for the transmission of control signals
- where the assembly (7) can be connected via a bus interface (17) to the bus system
- where at least the data line (9) extends through the bus interface (17) and
- where the bus interface (17) comprises at least one shift register (21 to 26) and means (20) for the looping of the shift register (21 to 26) into the data line (9), characterised in that the bus interface (17) possesses
- means (20) for the short-circuiting of the data line (9) as well as an additional shift register (27) for the storage of a command which is transmitted via the data line (9) and which serves at least to influence the means (20) for the looping in of the shift register (21 to 26) or the means (20) for the short-circuiting of the data line (9) and
- means (20) which, upon the command transmission, couple the additional shift register (27) to the data line (9) and bridge the data line (9).

11. An assembly as claimed in Claim 10, characterised in that the bus interface (17) comprises a plurality of shift registers (21 to 26) with register lengths which differ from one another and means (20) for the looping in of the shift registers (21 to 26) into the data line (9).

12. An assembly as claimed in Claim 11, characterised in that the register lengths are 0 bits, 1 bit and integral multiples of 8 bits.

13. An assembly as claimed in one of Claims 10 to 12, characterised in that the bus interface (17) comprises a serial-parallel converter.

14. An assembly as claimed in one of Claims 10 to 13, characterised in that the bus system comprises at least one additional control line (12 and 11).

15. An assembly as claimed in one of Claims 10 to 14, characterised in that the bus system comprises at least one acknowledgement line (13) for the acknowledgement of signals from the assembly (7) to the central unit (1).

16. An assembly as claimed in Claim 15, characterised in that the bus system additionally comprises an alarm line (14) for the signalling to the central unit (1) of alarms initiated by the assembly (7).

17. An assembly as claimed in one of Claims 10 to 16, characterised in that also the control line (11 and 12), optionally also the additional control line (12 and 11), the acknowledgement line (13) and the alarm line (14), and preferably also the clock line (10) extend(s) through the bus interface (17) so that the bus interface (17) can terminate the bus system.

18. An assembly as claimed in one of Claims 10 to 17, characterised in that the bus system comprises a release line (15) by means of which the outputs of output units (33, 35) can be coupled to and cut off from the bus system.

19. An assembly as claimed in Claim 17 and 18, characterised in that the release line (15) extends through the bus interface (17) only in the case of assemblies (18, 19, 36) which can terminate the bus system, so that the release- or blocking signal transmitted via the release line (15) can be tapped simultaneously from all the output units (33, 35) of the automation device.

20. An assembly as claimed in one of Claims 10 to 19, characterised in that the bus interface (17) is an ASIC.

21. An assembly as claimed in one of Claims 10 to 20, characterised in that in the assembly (7) at least on the side facing away from the central unit (1) the data line (9) is connected to a pull resistor (37).

22. A modular automation device, comprising a central unit (1) and a number of assemblies (7) according to one of Claims 10 to 21.

23. An automation device as claimed in Claim 22, characterised in that the central unit (1) comprises a processor (16) with a serial interface and that the bus system is connected to the serial interface of the processor (16).

24. An automation device as claimed in Claim 22 or 23, characterised in that the assemblies (7) can be combined to form a plurality of parallel-connected groups (2 to 5), where the groups (2 to 5) can be operated separately from one another.

25. An automation device as claimed in Claim 24, characterised in that at least one interface unit (6) is arranged between the groups (2 to 5) and the central unit (1).

26. An automation device as claimed in Claim 25, characterised in that each group (2 to 5) is allocated its own interface unit (6).

27. An automation device as claimed in Claim 24, 25 or 26, characterised in that the groups (2 to 5) can be arranged spaced from one another.

28. An automation device as claimed in one of Claims 24 to 27, characterised in that the groups (2 to 5) in each case possess an individual current supply means (SV).

29. An automation device as claimed in Claim 28, characterised in that the current supply means (SV) are integrated into the interface units (6).

## Revendications

1. Procédé de transmission d'informations numériques entre une unité centrale (1) et un certain nombre de modules (7) d'un appareil automatisé modulaire, ces sous-unités (7) étant de rang inférieur à celui de l'unité centrale (1),
- la transmission d'informations s'effectuant par un système de bus sériel, qui comporte au moins un conducteur (9) de données destiné à la transmission des informations, un conducteur (10) de cadence destiné à la prescription d'une cadence commune de système et au moins un conducteur (11 ou 12) de commande destiné à la transmission de signaux de commande, au moins le conducteur (9) de données passant dans les modules (7),
caractérisé en ce que les informations comprennent des instructions et des données,
- on transmet par le conducteur (9) de données en alternance des instructions et des données,
- lors de la transmission d'instructions les modules (7) shuntent le conducteur (9) de données et couplent au conducteur (9) de données un registre (27) à décalage destiné à la mémorisation d'une instruction transmise par l'intermédiaire du conducteur (9) de données, et
- lors de la transmission de données, soit les modules (7) mettent un registre (21 à 26) à décalage dans le circuit du conducteur (9) de données, soit shuntent le conducteur (9) de données, en fonction de l'instruction transmise en dernier.

2. Procédé de transmission d'informations suivant la revendication 1, caractérisé en ce que les longueurs des registres (21 à 26) à décalage incorporés dans le circuit du conducteur (9) de données sont spécifiques de l'instruction et/ou du module.

3. Procédé de transmission d'informations suivant l'une des revendications précédentes, caractérisé en ce que pour une partie des instructions, pour ce que l'on appelle des instructions individuelles, un seul module (par exemple 36) met son registre (21 à 26) à décalage dans le circuit du conducteur (9) de données et tous les autres modules (par exemple 32 à 35) shuntent le conducteur (9) de données.

4. Procédé de transmission d'informations suivant l'une des revendications précédentes, caractérisé en ce que pour une partie des instructions, pour ce que l'on appelle des instructions de groupe, plusieurs des modules connectés (32 à 36), notamment tous les modules connectés (32 à 36), mettent leurs registres (21 à 26) à décalage dans le circuit du conducteur (9) de données.

5. Procédé de transmission d'informations suivant la revendication 3 et 4, caractérisé en ce que les instructions de groupe sont plus courtes que les instructions individuelles.

6. Procédé de transmission d'informations suivant la revendication 5, caractérisé en ce que les instructions de groupe ont une longueur de 8 bits et les instructions individuelles ont une longueur de 16 bits.

7. Procédé de transmission d'informations suivant l'une des revendications précédentes,
caractérisé en ce que
- on maintient le conducteur (9) de données dans les modules (7) du côté éloigné de l'unité centrale (1) à un niveau défini, lorsque le conducteur (9) de données est à l'état de repos, par exemple par l'intermédiaire de résistances (37) Pull,
- l'unité centrale (1) transmet, lorsqu'un appareil démarre, une instruction de détermination du nombre et éventuellement aussi du groupement, des modules (7) connectés, aux modules (7),
- les modules (7) mettent, après transmission de l'instruction l'un (26) de leurs registres (21 à 26) à décalage, de préférence le registre (26) à décalage ayant la longueur de registre différente de zéro et la plus courte, dans le circuit du conducteur (9) de données, la valeur d'au moins l'un des bits du registre (26) à décalage mis dans le circuit du conducteur (9) de données ayant une valeur, qui est différente de la valeur déterminée par le niveau défini (+ 5V) et
- l'unité centrale (1) mémorise un certain nombre de bits par l'intermédiaire du conducteur (9) de données, le nombre de bits étant déterminé par le produit de la longueur du registre (26) à décalage mis dans le circuit du conducteur (9) de données et est du nombre maximum admissible de modules (7).

8. Procédé de transmission d'informations suivant la revendication 7,
caractérisé en ce que
- après la détermination du nombre des modules (7) connectés, l'unité centrale (1) fournit une instruction de transmission de données caractéristiques spécifiques de modules aux modules (7),
- les modules (7) mémorisent ensuite les données caractéristiques spécifiques de modules dans l'un (24) des registres (21 à 26) à décalage et mettent ce registre (24) à décalage dans le circuit du conducteur (9) de données et
- l'unité centrale (1) mémorise, à la transmission suivante de données, un certain nombre de bits, qui est déterminé par le produit de la longueur du registre (24) à décalage mis dans le circuit du conducteur (9) de données et du nombre des modules (7) connectés.

9. Procédé de transmission d'informations suivant la revendication 8,
caractérisé en ce que
- après la transmission des données caractéristiques spécifiques de sous-unités, l'unité centrale (1) fournit une instruction de réception de paramètres de fonctionnement aux modules (7),
- les modules (7) mettent ensuite l'un (24) des registres (21 à 26) à décalage dans le circuit du conducteur (9) de données,
- l'unité centrale (1) fournit, lors de la transmission suivante de données, un certain nombre de bits, qui est déterminé par le produit de la longueur du registre (24) à décalage mis dans le circuit du conducteur (9) de données et du nombre des modules (7) connectés et
- les modules (7) lisent, après que la transmission de données est terminée, les paramètres de fonctionnement mémorisés dans le registre (24) à décalage mis dans le circuit du conducteur (9) de données et se paramètrent suivant ce paramètre de fonctionnement.

10. Module pour un appareil automatisé et modulaire, le module (7) pouvant être relié par l'intermédiaire d'un système de bus sériel à une unité centrale (1) et à d'autres modules (7), le module (7) étant connecté à au moins un conducteur (9) de données destiné à la transmission d'informations, à un conducteur (10) de cadence destiné à la prescription d'une cadence commune de système et à au moins un conducteur (11 ou 12) de commande destiné à la transmission de signaux de commande,
- le module (7) pouvant être connecté par l'intermédiaire d'un circuit (17) de connexion de bus au système de bus,
- au moins le conducteur (9) de données passant par le circuit (17) de connexion de bus,
- le circuit (17) de connexion de bus comportant au moins un registre (21 à 26) à décalage et des moyens (20) de mise du registre (21 à 26) à décalage dans le circuit du conducteur (9) de données,
caractérisée en ce que le circuit (17) de connexion de bus comporte
- des moyens (20) destinés à court-circuiter le conducteur (9) de données ainsi qu'un autre registre (27) à décalage destiné à la mémorisation d'une instruction, qui est transmise par l'intermédiaire du conducteur (9) de données et qui est active au moins pour influencer les moyens (20) de mise du registre (21 à 26) à décalage dans le circuit ou les moyens (20) destinés à court-circuiter le conducteur de données, et
- des moyens (20) qui, lors de la transmission d'une instruction, couplent l'autre registre (27) à décalage au conducteur (9) de données et shuntent le conducteur (9) de données.

11. Module suivant la revendication 10, caractérisée en ce que le circuit (17) de connexion de bus comporte plusieurs registres (21 à 26) à décalage ayant des longueurs de registre différentes l'une de l'autre et des moyens (20) de mise des registres (21 à 26) à décalage dans le circuit du conducteur (9) de données.

12. Module suivant la revendication 11, caractérisée en ce que les longueurs des registres sont 0 bit, 1 bit et des multiples entiers de 8 bits.

13. Module suivant l'une des revendications 10 à 12,
caractérisée en ce que le circuit (17) de connexion de bus comporte un convertisseur série-parallèle.

14. Module suivant l'une des revendications 10 à 13,
caractérisée en ce que le système de bus comporte au moins un conducteur (12 ou 11) de commande supplémentaire.

15. Module suivant l'une des revendications 10 à 14,
caractérisée en ce que le système de bus comporte au moins un conducteur (13) destiné à accuser réception de signaux du module (7) vers l'unité centrale (1).

16. Module suivant la revendication 15, caractérisée en ce que le système de bus comporte en plus un conducteur (14) d'alarme destiné à la communication d'alarmes déclenchées par le module (7) à l'unité centrale (1).

17. Module suivant l'une des revendications 10 à 16,
caractérisée en ce qu'également le conducteur (11 ou 12) de commande, éventuellement aussi le conducteur (12 ou 11) de commande supplémentaire, le conducteur (13) d'accusé de réception et le conducteur (14) d'alarme et de préférence aussi le conducteur (10) de cadence passent par le circuit (17) de connexion de bus, de sorte que le circuit (17) de connexion de bus puisse terminer le système de bus.

18. Module suivant l'une des revendications 10 à 17,
caractérisée en ce que le système de bus comporte un conducteur (15) de libération, au moyen duquel les sorties d'unités (33, 35) de sortie peuvent être couplées au système de bus ou en être séparées.

19. Module suivant la revendication 17 et 18, caractérisée en ce que le conducteur (15) de libération ne traverse le circuit (17) de connexion de bus que dans des modules (18, 19, 36), qui peuvent terminer le système de bus, de sorte que le signal de libération ou de blocage transmis par l'intermédiaire du conducteur (15) de libération peut être prélevé en même temps par toutes les unités (33, 35) de sortie de l'appareil électrique.

20. Module suivant l'une des revendications 10 à 19,
caractérisée en ce que le circuit (17) de connexion du bus est un ASIC.

21. Module suivant l'une des revendications 10 à 20,
caractérisée en ce que le conducteur (9) de données est relié, dans le module (7), au moins du côté éloigné de l'unité centrale (1), à une résistance (37) Pull.

22. Appareil d'automatisation modulaire, constitué d'une unité centrale (1) et d'un certain nombre de modules (7) suivant l'une des revendications 10 à 21.

23. Appareil d'automatisation suivant la revendication 22,
caractérisé en ce que l'unité principale (1) comporte un processeur (16) ayant une interface sérielle et le système de bus est connecté à l'interface sérielle du processeur (16).

24. Appareil d'automatisation suivant la revendication 22 ou 23,
caractérisé en ce que les modules (7) peuvent être rassemblés en plusieurs groupes (2 à 5) branchés en parallèle, les groupes (2 à 5) pouvant réagir séparément l'un de l'autre.

25. Appareil d'automatisation suivant la revendication 24,
caractérisé en ce qu'au moins une unité (6) d'interface est disposée entre les groupes (2 à 5) et l'unité centrale (1).

26. Appareil d'automatisation suivant la revendication 25,
caractérisé en ce qu'une unité (6) d'interface propre est associée à chaque groupe (2 à 5).

27. Appareil d'automatisation suivant la revendication 24, 25 ou 26, caractérisé en ce que les groupes (2 à 5) peuvent être disposés à distance l'un de l'autre.

28. Appareil d'automatisation suivant l'une des revendications 24 à 27, caractérisé en ce que les groupes (2 à 5) comportent chacun une alimentation (SV) en courant qui leur est propre.

29. Appareil d'automatisation suivant la revendication 28,
caractérisé en ce que les alimentations (SV) en courant sont intégrées aux unités (6) d'interface.
